# EUROPÄISCHE PATENTSCHRIFT

(11) **EP 4 381 207 B1**
(45) Veröffentlichungstag und Bekanntmachung des Hinweises auf die Patenterteilung: **23.07.2025**
(21) Anmeldenummer: 22755163.7
(22) Anmeldetag: 25.07.2022
(51) Int. Cl.: F16H 61/04, F16H 59/46

(54) **VERFAHREN ZUM BETREIBEN EINER ANTRIEBSANORDNUNG**
DEVICE FOR OPERATING A DRIVE ASSEMBLY
DISPOSITIF POUR FAIRE FONCTIONNER UN ENSEMBLE D'ENTRAÎNEMENT

(30) Priorität: 06.08.2021 DE 102021208600
(43) Veröffentlichungstag der Anmeldung: 12.06.2024
(73) Patentinhaber: Robert Bosch GmbH, 70442 Stuttgart (DE)
(72) Erfinder: SHIGEMATSU, Takashi, Yokohama, 245-0005 (JP); KLIMENKO, Michael, 70839 Gerlingen (DE); LIU, Zhengyu, 70191 Stuttgart (DE); MIZOBE, Takuya, 71638 Ludwigsburg (DE)
(86) Internationale Anmeldenummer: PCT/EP2022/070799
(87) Internationale Veröffentlichungsnummer: WO 2023/011959

(56) Entgegenhaltungen:
- DE-A1- 10 038 331
- DE-A1- 102009 055 246
- DE-A1- 102010 063 024
- DE-A1- 102012 003 020
- JP-B2- 6 459 715

## Beschreibung

### Stand der Technik

Die Erfindung betrifft ein Verfahren zum Betreiben einer Antriebsanordnung, insbesondere für ein Fahrzeug, nach dem Oberbegriff des Anspruchs 1.

Bei Antriebsanordnungen mit einer elektrischen Maschine ist es in der Regel vorgesehen, dass diese mit einem Abtriebselement, bspw. einer Abtriebswelle, gekoppelt und von diesem wieder abgekoppelt werden kann. Für einen solchen Kupplungsvorgang ist es notwendig, die Drehzahlen der elektrischen Maschine und des Abtriebselements aufeinander abzustimmen. In der Regel steht die abgekoppelte elektrische Maschine still und dreht sich nicht. Zum Kuppelvorgang muss die elektrische Maschine entsprechend auf eine bestimmte Drehzahl beschleunigt werden. Es gibt verschiedene Modelle für eine derartige Drehzahlregulierung. Dabei werden unterschiedliche Einflüsse wie z. B. Reibung, Drehzahlgradient oder Änderungsgeschwindigkeit in den Modellen berücksichtigt.

Derartige Modelle werden bspw. jeweils in DE 10 2009 055 246 A1 und DE 10 2012 003 020 A1 beschrieben.

Aus der DE 100 38 331 A1 ein Verfahren zum Betreiben einer Antriebsanordnung bekannt, bei welchem eine Antriebswelle in einem Kupplungsvorgang mit einem Koppelelement einer Kupplungseinrichtung drehfest gekoppelt und in einem Abkupplungsvorgang von diesem abgekoppelt werden kann, wobei beim Kupplungsvorgang eine Verzahnung eines Kupplungselements der Kupplungseinrichtung und eine Verzahnung des Koppelelements formschlüssig miteinander in Eingriff gebracht werden und wobei vor oder während des Kupplungsvorgangs eine Drehzahlregulierung der Drehzahl der Antriebswelle relativ zur Drehzahl des Koppelelements durchgeführt wird.

### Offenbarung der Erfindung

Das der Erfindung zugrundeliegende Problem wird durch ein Verfahren zum Betreiben einer Antriebsanordnung, insbesondere für ein Fahrzeug, mit den Merkmalen des Anspruchs 1 gelöst. Vorteilhafte Weiterbildungen der Erfindung sind in den Unteransprüchen genannt.

Erfindungsgemäß wird ein Verfahren zum Betreiben einer Antriebsanordnung, insbesondere für ein Fahrzeug, vorgeschlagen. Dabei umfasst die Antriebsanordnung eine Antriebswelle. Die Antriebswelle ist insbesondere drehfest oder mittels einer Verzahnung (bspw. einer Stirnradstufe) mit einem Antrieb, insbesondere einer elektrischen Maschine (Elektromotor), gekoppelt.

Die Antriebsanordnung umfasst weiter ein Koppelelement. Dies kann bspw. eine mit einer Abtriebswelle, einer Zwischenwelle oder einem auf der Antriebswelle angeordnetem Losrad gekoppelte Verzahnung bzw. Zahnrad/Ritzel sein.

Die Antriebsanordnung umfasst weiter eine Kupplungseinrichtung mit einem Kupplungselement (z. B. Schaltmuffe), wobei das Kupplungselement drehfest mit der Antriebswelle gekoppelt ist. Das Kupplungselement ist insbesondere mittels eines auf der Antriebswelle angeordneten Zahnrads bzw. einer auf der Antriebswelle angeordneten Führungsnabe mit einer Verzahnung drehfest mit der Antriebswelle gekoppelt. Das Kupplungselement ist insbesondere axial (also entlang der Längsrichtung der Antriebswelle, bzw. parallel zur Mittellängsachse der Antriebswelle) verschiebbar.

Die Antriebswelle kann in einem Kupplungsvorgang mit dem Koppelelement drehfest gekoppelt und in einem Abkupplungsvorgang von diesem abgekoppelt werden. Beim Kupplungsvorgang werden eine Verzahnung (insbesondere eine Innenverzahnung) des Kupplungselements und eine Verzahnung (insbesondere Außenverzahnung) des Koppelelements formschlüssig miteinander in Eingriff gebracht. Das Kupplungselement wird hierzu insbesondere axial verlagert.

Insbesondere läuft das Kupplungselement dabei mit seiner Innenverzahnung auf einer korrespondierenden Außenverzahnung der Führungsnabe bzw. des Zahnrades.

Vor und/oder während des Kupplungsvorgangs wird eine Drehzahlregulierung der Drehzahl der Antriebswelle relativ zur Drehzahl des Koppelelements (bzw. der damit gekoppelten Abtriebswelle, Zwischenwelle, oder dem Losrad) durchgeführt. Vorliegend ist mit einer Drehzahlregulierung insbesondere eine Anpassung, ein Ausgleich bzw. eine Synchronisierung der Drehzahlen der Antriebswelle und des Koppelelements bzw. der Differenzdrehzahl gemeint.

Die Drehzahlregulierung wird in Abhängigkeit von einem Abnutzungsgrad der Verzahnung des Kupplungselements und/oder der Verzahnung des Koppelelements (insbesondere abhängig von dem Verzahnungsprofil der miteinander formschlüssig koppelnder Elemente) angepasst, wobei die Anzahl der durchgeführten Kupplungsvorgänge des Kupplungselements mit dem Koppelelement erfasst und aus der erfassten Anzahl der durchgeführten Kupplungsvorgänge der Abnutzungsgrad der Verzahnung des Kupplungselements und/oder der Verzahnung des Koppelelements bestimmt wird. Hieraus lässt sich eine Abschätzung der durch Verschleiß entstandenen tatsächlichen Zahngeometrie ableiten.

Der Verschleiß der miteinander koppelnden Elemente, durch den bspw. die Geometrie der Verzahnung der jeweiligen Elemente verändert wird, hat insbesondere Einfluss auf das Kupplungsverhalten der miteinander koppelnden Elemente. Durch die Anpassung der Drehzahlregulierung in Abhängigkeit von Verschleiß lässt sich der Koppelvorgang über die gesamte Lebensdauer einer Antriebsanordnung optimal einstellen. Dies trägt zu einem positiven und gleichbleibenden Feedback für eine Bedienperson der Antriebsanordnung bzw. des Fahrzeugs bei.

Die Kupplungszeit, also die Zeit, die während eines Kupplungsvorgangs verstreicht, ist abhängig von der Drehzahldifferenz der miteinander koppelnden Elemente. Ist die Drehzahldifferenz zu klein (sowohl in positiver als auch negativer Drehrichtung), so ist die Kupplungszeit groß. Ist die Drehzahldifferenz zu groß, stoßen sich die Verzahnungen der koppelnden Elemente ab und die Kupplungszeit wird größer. Es gibt also einen Differenzdrehzahlzielbereich (bzw. eine Zieldrehzahldifferenz, einen Zieldrehzahldifferenzwert), bei der die Kupplungszeit minimal ist. Es ist wünschenswert, die Kupplungszeit zu minimieren, um durch den Kupplungsvorgang, bspw. den Fahrkomfort nicht negativ zu beeinflussen.

Durch den Verschleiß der miteinander koppelnden Elemente verschiebt sich der Differenzdrehzahlzielbereich (bzw. die Zieldrehzahldifferenz), bei dem der Kupplungsvorgang optimal durchgeführt werden kann.

Gemäß einer Weiterbildung kann die Anzahl der durchgeführten Kupplungsvorgänge des Kupplungselements mit dem Koppelelement (d.h. die Anzahl der insgesamt durchgeführten Kupplungsvorgänge seit Inbetriebnahme der Antriebsanordnung) mittels einer Zähleinrichtung oder einem Sensor erfasst werden.

Gemäß einer Weiterbildung kann eine, insbesondere vorher bestimmte (simuliert durch ein Modell oder empirisch bestimmt), den Abnutzungsgrad der Verzahnung des Kupplungselements und/oder der Verzahnung des Koppelelements repräsentierende Kennlinie bestimmt und in einem Speicher hinterlegt werden. Die Kennlinie repräsentiert insbesondere die Verschiebung des Differenzdrehzahlzielbereichs (bzw. der Zieldrehzahldifferenz) in Abhängigkeit von der Abnutzung. Die Kennlinie kann insbesondere in einer Steuerungseinrichtung der Kupplungseinrichtung oder der Antriebsanordnung hinterlegt werden.

Insbesondere wird die Zieldrehzahldifferenz mit der Anzahl der durchgeführten Kupplungsvorgänge (also mit zunehmendem Verschleiß) größer, wobei insbesondere gleichzeitig die minimale Kupplungszeit kleiner wird. Mit anderen Worten kann die minimale Kupplungszeit während der Lebensdauer der Antriebsanordnung durch eine Anpassung der Drehzahlregulierung gemäß der Kennlinie weiter reduziert werden.

Gemäß einer Weiterbildung kann die Drehzahlregulierung in Abhängigkeit von der im Speicher hinterlegten Kennlinie angepasst werden.

Gemäß einer Weiterbildung kann zur Drehzahlregulierung die Drehzahl des Kupplungselements (bzw. der Antriebswelle) an die Drehzahl des Koppelelements, insbesondere durch ein Erhöhen der Drehzahl der Antriebswelle, angepasst werden. Dies kann insbesondere durch ein Hochfahren (bei vorherigem Stillstand) und/oder ein Beschleunigen der elektrischen Maschine umgesetzt werden.

Gemäß einer Weiterbildung kann während des Kupplungsvorgangs die Verzahnung des Kupplungselements und die Verzahnung des Koppelelements bei einer gewünschten, insbesondere vorbestimmten, Zieldrehzahldifferenz (bzw. einem Zieldrehzahldifferenzwert oder -bereich) zwischen der Drehzahl des Kupplungselements (bzw. der Antriebswelle) und der Drehzahl des Koppelelements miteinander in Eingriff gebracht werden. Hierdurch lässt sich die Kupplungszeit minimieren.

Gemäß einer Weiterbildung kann die Zieldrehzahldifferenz (bzw. einem Zieldrehzahldifferenzwert oder -bereich) in Abhängigkeit von dem Abnutzungsgrad der Verzahnung des Kupplungselements und/oder der Verzahnung des Koppelelements kalibriert (nachjustiert oder eingestellt) werden.

Nachfolgend wird eine Ausführungsform der Erfindung unter Bezugnahme auf die beiliegenden Zeichnungen erläutert. Es zeigen:
- Figur 1: eine schematische Darstellung einer Antriebsanordnung;
- Figur 2: eine schematische Darstellung von Verzahnungen eines Koppelelements, eines Kupplungselements und einer Führungsnabe vor einem Kupplungsvorgang;
- Figur 3: eine schematische Darstellung der Verzahnungen gemäß Figur 2 während des Kupplungsvorgangs;
- Figur 4: eine schematische Darstellung der Verzahnungen gemäß Figur 2 nach dem Kupplungsvorgang; und
- Figur 5: eine schematische Darstellung einer sich durch Abnutzung verändernden Verzahnungsgeometrie.

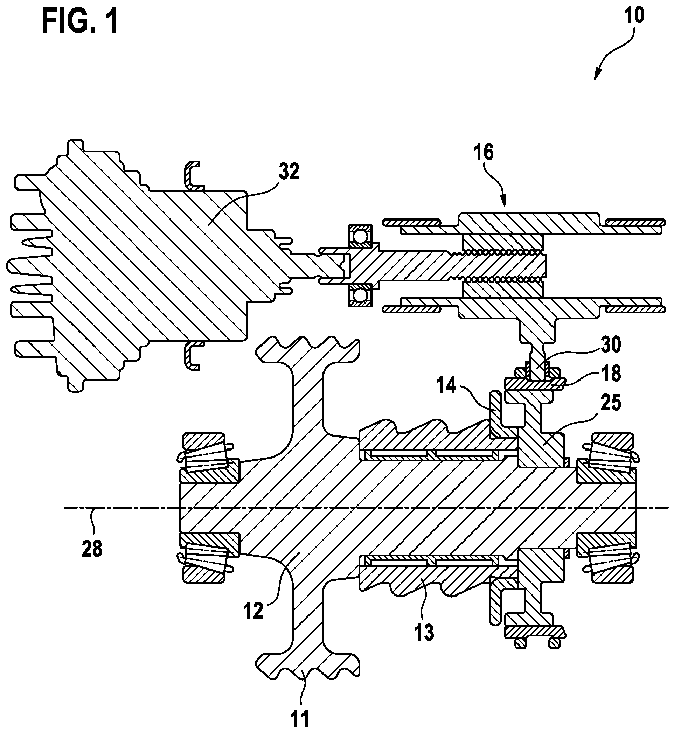

Die Antriebsanordnung trägt in Figur 1 insgesamt das Bezugszeichen 10. Die Antriebsanordnung 10 kann bspw. als E-Achse ausgebildet sein oder Bestandteil einer E-Achse bilden.

Vorliegend wird das Verfahren beispielhaft anhand der in den Figuren gezeigten Antriebsanordnung 10 erläutert. Das erfindungsgmäße Verfahren, welches durch die Ansprüche definiert wird, ist nicht auf die gezeigte Antriebsanordnung 10 beschränkt, sondern kann auch an anderen Antriebsanordnungen mit einer Kupplung durchgeführt werden.

Die Antriebsanordnung 10 weist eine Antriebswelle 12 auf. Diese ist über das Zahnrad 11 mit einer elektrischen Maschine gekoppelt (nicht dargestellt). Auf der Antriebswelle 12 ist ein Losrad 13 angeordnet, das bspw. mit einem Differential (nicht dargestellt) kämmt. Auf dem Losrad 13 ist ein Koppelelement 14 angeordnet.

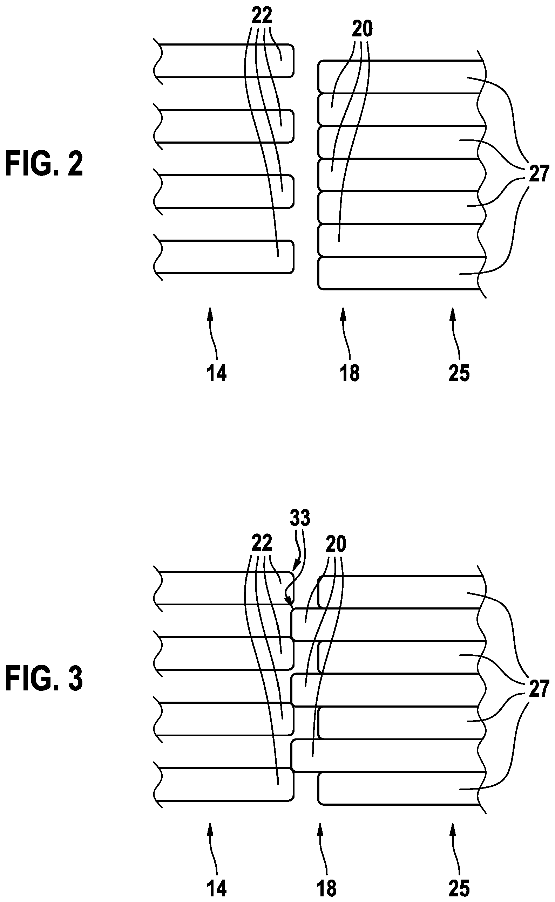

Die Antriebsanordnung 10 weist eine Kupplungseinrichtung 16 mit einem Kupplungselement 18 auf. Das Kupplungselement 18 weist eine Verzahnung 20 (Innenverzahnung) und das Koppelelement 14 eine Verzahnung 22 (Außenverzahnung) auf (vgl. Fig.1 und 2).

Auf der Antriebswelle 12 ist eine Führungsnabe 25 mit einer Verzahnung 27 (Außenverzahnung) drehfest angeordnet (vgl. Fig.1 und 2). Das Kupplungselement 18 ist drehfest auf der Führungsnabe 25 angeordnet, wobei die (Innen-)Verzahnung 20 des Kupplungselements 18 und die (Außen-)Verzahnung 27 der Führungsnabe 25 miteinander in Eingriff sind.

Das Kupplungselement 18 ist axial verschiebbar ausgebildet. Mit anderen Worten kann das Kupplungselement 18 parallel zur Mittellängsachse 28 der Antriebswelle 12 bewegt werden. Hierzu weist die Kupplungseinrichtung 16 im Beispiel eine Schaltgabel 30 auf, die mittels eines elektrischen Antriebs 32 axial, also parallel zur Mittellängsachse 28 der Antriebswelle 12, abgetrieben bzw. bewegt werden kann.

Die in Figur 1 gezeigte Antriebsanordnung 10 befindet sich in einem Zustand vor einem Kupplungsvorgang (Koppelelement 14 und Kupplungselement 18 (noch) nicht miteinander gekoppelt).

Figur 2 zeigt eine schematische Darstellung der Verzahnung 22 des Koppelelements 14, der Verzahnung 20 des Kupplungselements 18 und der Verzahnung 27 der Führungsnabe 25 vor dem Kupplungsvorgang.

Vor dem Kupplungsvorgang ist die Verzahnung 20 des Kupplungselements 18 beabstandet von der Verzahnung 22 des Koppelelements 14 angeordnet.

Figur 3 zeigt eine schematische Darstellung der Verzahnungen 20, 22, 27 gemäß Figur 2 während des Kupplungsvorgangs. Während des Kupplungsvorgangs schiebt im Beispiel die Schaltgabel 30 (vgl. Fig. 1) das Kupplungselement 18 in Richtung des Koppelelements 14 (in Figur 3 nach links).

Abhängig von der Drehzahldifferenz des Kupplungselements 18 und des Koppelelements 14 gelangen die Verzahnungen 20, 22 des Kupplungselements 18 und des Koppelelements 14 direkt in Eingriff oder die Verzahnungen 20, 22 stoßen sich einige Male ab, bevor sie in Eingriff gelangen. Dabei kommt es insbesondere an den Eckbereichen 33 der Verzahnungen 20, 22 zur hohen Materialbeanspruchung und einer entsprechenden Abnutzung bzw. einer Deformation des Materials.

Die Anzahl der Abstoßungen bevor die Verzahnungen 20, 22 in Eingriff gelangen, kann zum einen von der Drehzahldifferenz des Kupplungselements 18 und des Koppelelements 14 und zum anderen von der Verzahnungsgeometrie abhängen.

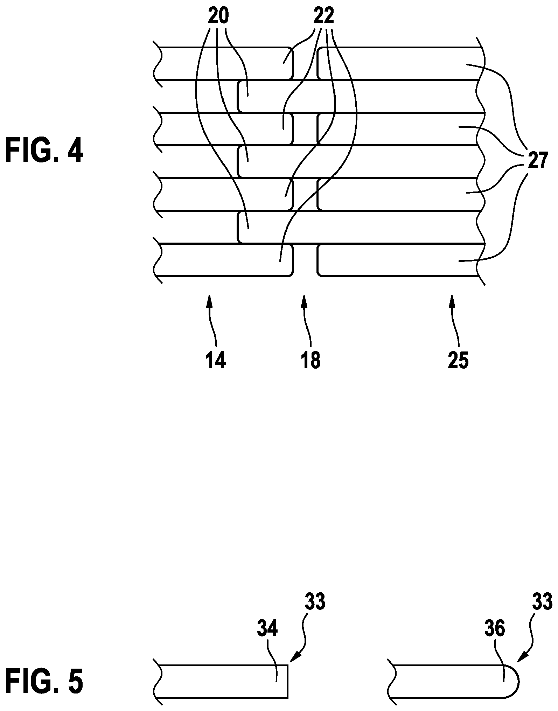

Figur 4 zeigt eine schematische Darstellung der Verzahnungen 20, 22, 27 gemäß Figur 2 nach dem Kupplungsvorgang. Die Verzahnung 22 des Koppelelements 14 und die Verzahnung 20 des Kupplungselements 18 sind nun miteinander in Eingriff. Damit sind das Koppelelement 14 und das Kupplungselement 18 drehfest miteinander gekoppelt. Im miteinander gekoppeltem Zustand sind die Drehzahlen des Koppelelements 14 und des Kupplungselements 18 gleich groß.

Figur 5 zeigt eine schematische Darstellung einer sich durch Abnutzung ändernden Verzahnungsgeometrie. Eine unverschlissene, also noch nicht abgenutzte Verzahnungsgeometrie ist in Figur 5 mit dem Bezugszeichen 34 versehen. Eine verschlissene Verzahnungsgeometrie ist in Figur 5 mit dem Bezugszeichen 36 versehen. Es ist schematisch dargestellt, dass es, insbesondere in den Eckbereichen 33 der Verzahnung, zu einem Materialabtrag und/oder Deformation kommt.

Wie oben erwähnt, ist die Abstoßung der Verzahnungen 20, 22 des Koppelelements 14 und des Kupplungselements 18 während eines Kupplungsvorgangs von der Verzahnungsgeometrie abhängig. So ist bei der unverschlissenen Verzahnungsgeometrie 34, insbesondere aufgrund der anfänglich noch kantigen Eckbereiche 33, mit mehr Abstoßungen vor dem Eingriff der Verzahnungen 20, 22 zu rechnen als bei der verschliessenen Verzahnungsgeometrie 36. Mit anderen Worten rutschen die abgerundeten (verschlissenen) Eckbereiche 33 der Verzahnungen 20, 22 besser aneinander vorbei für einen Eingriff. Entsprechend können die Verzahnungen 20, 22 des Koppelelements 14 und des Kupplungselements 18 bei einer höheren Differenzdrehzahl besser miteinander in Eingriff gelangen.

Somit lässt sich durch eine Anpassung der Differenzdrehzahl in Abhängigkeit der Abnutzung speziell eines Abnutzungsgrads die Kupplungszeit minimieren und somit der Kupplungsvorgang optimieren.

## Patentansprüche

1. Verfahren zum Betreiben einer Antriebsanordnung (10), insbesondere für ein Fahrzeug, umfassend
- eine Antriebswelle (12)
- ein Koppelelement (14)
- eine Kupplungseinrichtung (16) mit einem Kupplungselement (18),
wobei das Kupplungselement (18) drehfest mit der Antriebswelle (12) gekoppelt ist,
- wobei die Antriebswelle (12) in einem Kupplungsvorgang mit dem Koppelelement (14) drehfest gekoppelt und in einem Abkupplungsvorgang von diesem abgekoppelt werden kann,
- wobei beim Kupplungsvorgang eine Verzahnung (20) des Kupplungselements (18) und eine Verzahnung (22) des Koppelelements (14) formschlüssig miteinander in Eingriff gebracht werden,
- wobei vor und/oder während des Kupplungsvorgangs eine Drehzahlregulierung der Drehzahl der Antriebswelle (12) relativ zur Drehzahl des Koppelelements (14) durchgeführt wird,
**dadurch gekennzeichnet,**
**dass** die Drehzahlregulierung in Abhängigkeit von einem Abnutzungsgrad der Verzahnung (20) des Kupplungselements (18) und/oder der Verzahnung (22) des Koppelelements (14) angepasst wird, wobei die Anzahl der durchgeführten Kupplungsvorgänge des Kupplungselements (18) mit dem Koppelelement (14) erfasst wird und aus der erfassten Anzahl der durchgeführten Kupplungsvorgänge der Abnutzungsgrad der Verzahnung (20) des Kupplungselements (18) und/oder der Verzahnung (22) des Koppelelements (14) bestimmt wird.

2. Verfahren nach Anspruch 1, **dadurch gekennzeichnet, dass** die Anzahl der durchgeführten Kupplungsvorgänge des Kupplungselements (18) mit dem Koppelelement (14) mittels einer Zähleinrichtung oder einem Sensor erfasst wird.

3. Verfahren nach einem der voranstehenden Ansprüche, **dadurch gekennzeichnet, dass** eine den Abnutzungsgrad der Verzahnung (20) des Kupplungselements (18) und/oder der Verzahnung (22) des Koppelelements (14) repräsentierende Kennlinie bestimmt und in einem Speicher hinterlegt wird.

4. Verfahren nach Anspruch 3, **dadurch gekennzeichnet, dass** die Drehzahlregulierung in Abhängigkeit von der im Speicher hinterlegten Kennlinie angepasst wird.

5. Verfahren nach Anspruch 4, **dadurch gekennzeichnet, dass** zur Drehzahlregulierung die Drehzahl des Kupplungselements (18) an die Drehzahl des Koppelelements (14), insbesondere durch Erhöhen der Drehzahl der Antriebswelle (12), angepasst wird.

6. Verfahren nach einem der voranstehenden Ansprüche, **dadurch gekennzeichnet, dass** während des Kupplungsvorgangs die Verzahnung (20) des Kupplungselements (18) und die Verzahnung (22) des Koppelelements (14) bei einer gewünschten, insbesondere vorbestimmten, Zieldrehzahldifferenz zwischen der Drehzahl des Kupplungselements (18) und der Drehzahl des Koppelelements (14) miteinander in Eingriff gebracht werden.

7. Verfahren nach Anspruch 6, **dadurch gekennzeichnet, dass** die Zieldrehzahldifferenz in Abhängigkeit von dem Abnutzungsgrad der Verzahnung (20) des Kupplungselements (18) und/oder der Verzahnung (22) des Koppelelements (14) kalibriert wird.

## Claims

1. Method for operating a drive arrangement (10), in particular for a vehicle, comprising
- a drive shaft (12),
- a coupling element (14),
- a clutch device (16) with a clutch element (18), wherein the clutch element (18) is coupled fixedly to the drive shaft (12) for conjoint rotation,
- wherein the drive shaft (12) can be coupled fixedly to the coupling element (14) for conjoint rotation in a coupling operation and can be decoupled therefrom in a decoupling operation,
- wherein, during the coupling operation, a toothing system (20) of the clutch element (18) and a toothing system (22) of the coupling element (14) are brought into engagement with one another in a form-fitting manner,
- wherein a speed regulation of the speed of the drive shaft (12) relative to the speed of the coupling element (14) is carried out before and/or during the coupling operation,
**characterized**
**in that** the speed regulation is adapted in a manner dependent on a degree of wear of the toothing system (20) of the clutch element (18) and/or the toothing system (22) of the coupling element (14), wherein the number of performed coupling operations of the clutch element (18) to the coupling element (14) is recorded, and the degree of wear of the toothing system (20) of the clutch element (18) and/or the toothing system (22) of the coupling element (14) is determined from the recorded number of performed coupling operations.

2. Method according to Claim 1, **characterized in that** the number of performed coupling operations of the clutch element (18) to the coupling element (14) is recorded by means of a counting device or a sensor.

3. Method according to either of the preceding claims, **characterized in that** a characteristic curve representing the degree of wear of the toothing system (20) of the clutch element (18) and/or the toothing system (22) of the coupling element (14) is determined and stored in a memory.

4. Method according to Claim 3, **characterized in that** the speed regulation is adapted in a manner dependent on the characteristic curve stored in the memory.

5. Method according to Claim 4, **characterized in that**, for speed regulation, the speed of the clutch element (18) is adapted to the speed of the coupling element (14), in particular by increasing the speed of the drive shaft (12).

6. Method according to one of the preceding claims, **characterized in that**, during the coupling operation, the toothing system (20) of the clutch element (18) and the toothing system (22) of the coupling element (14) are brought into engagement with each other at a desired, in particular predetermined, target speed difference between the speed of the clutch element (18) and the speed of the coupling element (14).

7. Method according to Claim 6, **characterized in that** the target speed difference is calibrated in a manner dependent on the degree of wear of the toothing system (20) of the clutch element (18) and/or the toothing system (22) of the coupling element (14).

## Revendications

1. Procédé pour faire fonctionner un dispositif d'entraînement (10), en particulier pour un véhicule, comprenant
- un arbre d'entraînement (12),
- un élément d'accouplement (14),
- une unité d'accouplement (16) comprenant un élément d'accouplement (18), l'élément d'accouplement (18) étant accouplé de manière solidaire en rotation à l'arbre d'entraînement (12),
- l'arbre d'entraînement (12) étant apte à être relié de manière solidaire en rotation à l'élément d'accouplement (14) lors d'une opération de couplage et à être désaccouplé de celui-ci lors d'une opération de désaccouplement,
- lors du processus d'accouplement, une denture (20) de l'élément d'accouplement (18) et une denture (22) de l'élément d'accouplement (14) sont amenées en prise l'une avec l'autre par engagement positif,
- une régulation de la vitesse de rotation de l'arbre d'entraînement (12) par rapport à la vitesse de rotation de l'élément d'accouplement (14) étant effectuée avant et/ou pendant le processus d'accouplement,
**caractérisé en ce que**
la régulation de la vitesse de rotation est adaptée en fonction d'un degré d'usure de la denture (20) de l'élément de liaison (18) et/ou de la denture (22) de l'élément d'accouplement (14), le nombre de processus d'accouplement effectués par l'élément de liaison (18) avec l'élément d'accouplement (14) étant enregistré et le degré d'usure de la denture (20) de l'élément de liaison (18) et/ou de la denture (22) de l'élément d'accouplement (14) étant déterminé à partir du nombre enregistré de processus d'accouplement effectués.

2. Procédé selon la revendication 1, **caractérisé en ce que** le nombre d'opérations de couplage effectuées par l'élément de couplage (18) avec l'élément d'accouplement (14) est enregistré au moyen d'un dispositif de comptage ou d'un capteur.

3. Procédé selon l'une des revendications précédentes, **caractérisé en ce qu'**une courbe caractéristique représentant le degré d'usure de la denture (20) de l'élément de couplage (18) et/ou de la denture (22) de l'élément d'accouplement (14) est déterminée et enregistrée dans une mémoire.

4. Procédé selon la revendication 3, **caractérisé en ce que** la régulation de la vitesse de rotation est adaptée en fonction de la courbe caractéristique enregistrée dans la mémoire.

5. Procédé selon la revendication 4, **caractérisé en ce que**, pour réguler la vitesse de rotation, la vitesse de rotation de l'élément d'accouplement (18) est adaptée à la vitesse de rotation de l'élément d'accouplement (14), en particulier en augmentant la vitesse de rotation de l'arbre d'entraînement (12).

6. Procédé selon l'une des revendications précédentes, **caractérisé en ce que**, pendant le processus d'accouplement, la denture (20) de l'élément de couplage (18) et la denture (22) de l'élément d'accouplement (14) sont mises en prise l'une avec l'autre à une différence de vitesse de rotation cible souhaitée, en particulier prédéterminée, entre la vitesse de rotation de l'élément de couplage (18) et la vitesse de rotation de l'élément d'accouplement (14).

7. Procédé selon la revendication 6, **caractérisé en ce que** la différence de vitesse de rotation cible est étalonnée en fonction du degré d'usure de la denture (20) de l'élément de couplage (18) et/ou de la denture (22) de l'élément d'accouplement (14).
